# EUROPEAN PATENT APPLICATION

(11) **EP 4 663 079 A1**
(43) Date of publication of application: **17.12.2025**
(21) Application number: 24927600.7
(22) Date of filing: 23.04.2024
(51) Int. Cl.: A47J 45/06, A47J 36/18

(54) **COOKING CONTAINER**

(71) Applicant: Shinetsu Works Co., Ltd., Tsubame-shi, Niigata 959-1286 (JP)
(72) Inventor: SHIBUKI Tetsuya, Tsubame-shi, Niigata 959-1286 (JP); TOMITA Kazuhiko, Fukuoka-shi, Fukuoka 812-0045 (JP)
(74) Representative: Peters, Hajo
(86) International application number: PCT/JP2024/015879
(87) International publication number: WO 2025/224832

(57) **Abstract**

The present invention relates to a cooking vessel including a bottomed cylindrical body having an upper opening; and a pair of handles provided on the body, wherein each of the handles has a gripping member that is sloped in a lateral view with respect to an upper rim section of the body, allowing users to turn the vessel while effortlessly maintaining a natural posture.

## Description

### Technical Field

The present invention relates to a cooking vessel in the form of, for example, a pot or a draining vessel.

### Background Art

As a conventional pot for boiling noodles, patent document 1 proposes and describes a noodle boiling pot. This noodle boiling pot, described in patent document 1, consists of an outer pot (1) and a netted inner pot (2) whose body portion (21) is accommodated within the outer pot (1).

This noodle boiling pot is designed such that the outer pot (1) accommodates the inner pot (2) inside, allowing noodles that have been put thereinto to be cooked in hot water boiled within the outer pot (1). Once the noodles are fully cooked, the left and right handles (22) of the inner pot can be gripped with both hands to lift the inner pot (2) out of the outer pot (1), which drains the cooking liquid through the mesh openings of the netted inner pot (2), thereby completing the drainage process.

The inner pot (2) may be turned upside down to transfer the noodles, drained by the inner pot (2), to a frying pan for the next cooking step or to serve them on a dish.

### PRIOR ART DOCUMENTS

### Patent documents

Patent Document 1: JP-A-2006-129892

### Summary of Invention

### Technical Problem

However, this turning of the inner pot (2) upside down necessitates twisting of the wrists and significant bending of both arms, which poses an issue that it can often result in an awkward body posture.

It is therefore an object of the present invention to provide a cooking vessel that addresses the above issue, allowing users to turn the vessel while effortlessly maintaining a natural posture.

### Solution to Problem

The cooking vessel according to the present invention is

### Advantageous Effects of Invention

The present invention makes it easy to turn a cooking vessel.

### Brief Description of Drawings

FIG. 1 is a perspective view of a draining vessel according to an embodiment of the present invention.
FIG. 2 is a partial front cross-sectional view of the draining vessel according to an embodiment of the present invention.
FIG. 3 is a plan view of the draining vessel according to the embodiment of the present invention.
FIG. 4 is a left-side view of the draining vessel according to the embodiment of the present invention.
FIG. 5 is a right-side view of the draining vessel according to the embodiment of the present invention.
FIG. 6 is a partially enlarged cross-sectional view of the draining vessel according to the embodiment of the present invention.
FIG. 7 is a cross-sectional view showing pasta being boiled in the draining vessel according to the embodiment of the present invention.
FIG. 8 is a right-side view showing pasta being transferred to a frying pan from the draining vessel according to the embodiment of the present invention.
FIG. 9 is a side view showing the draining vessel placed upside down according to the embodiment of the present invention.

### Description of Embodiments

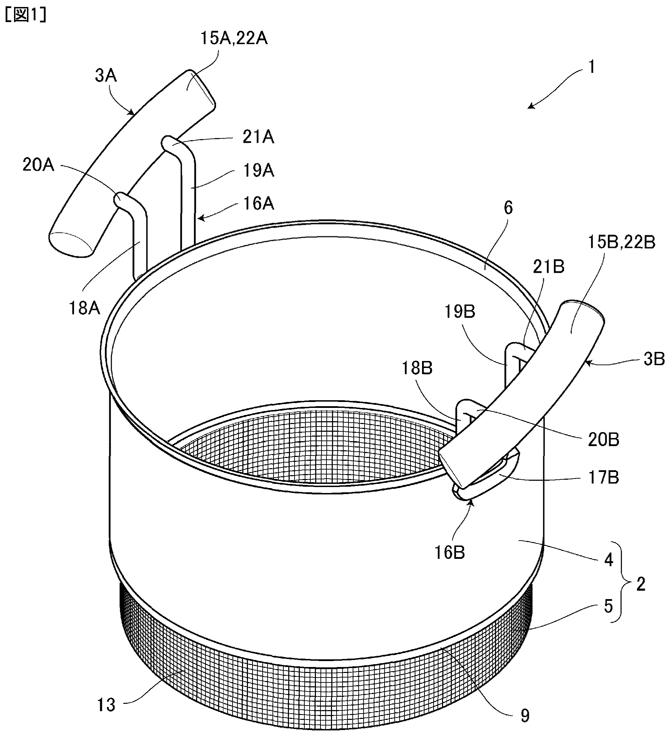

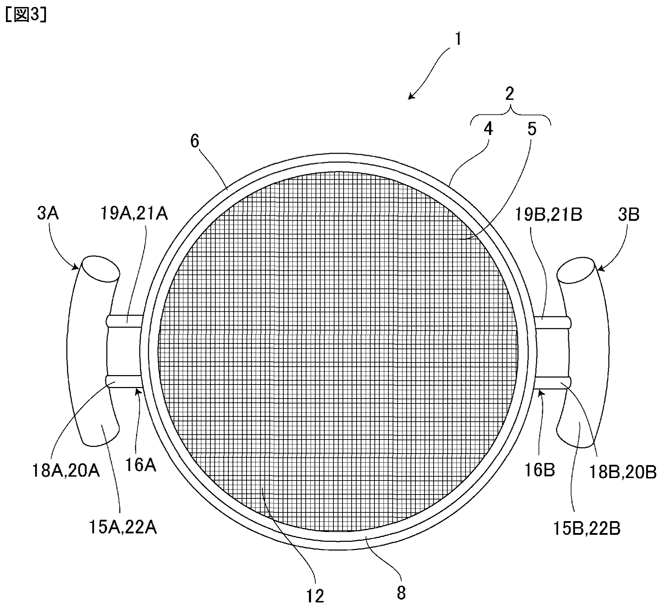

The embodiments of the present invention will be described hereunder with reference to the attached FIGs. 1 to 9. The features described below are not all essential to the present invention.

As illustrated in FIG. 1, the draining vessel 1, serving as a cooking vessel, includes a bottomed cylindrical body 2 having an upper opening and a pair of left-and-right handles 3A and 3B attached to the body 2. The body 2 includes a substantially cylindrical body section 4 whose upper and lower ends are open and a substantially cylindrical draining section 5 having a bottom and an upper opening. The handles 3A and 3B, the body section 4, and the draining section 5, according to the present embodiment, are all formed of stainless steel. Alternatively, they may be formed of, for example, another metal or a heat-resistant synthetic resin.

The body section 4 includes an upper rim section 6 located at its upper end region, which is formed to slope and extend outward. The body section 4 includes a locking section 7 at its lower end region and a retaining section 8 that is formed above the locking section 7 and serves for retaining an engagement edge section 14 of the draining section 5 to be described below.

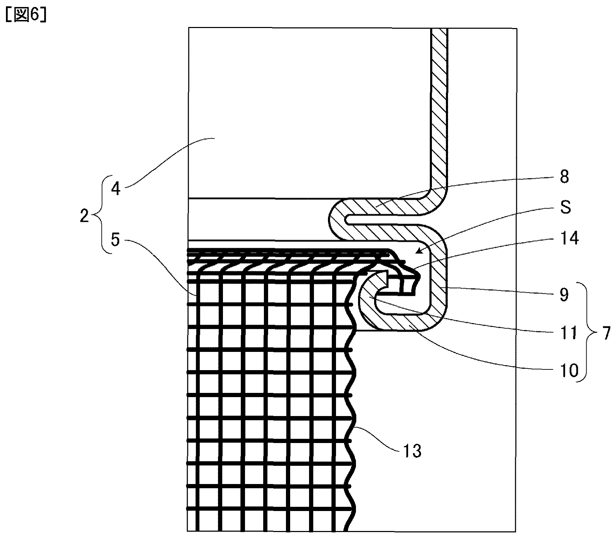

As illustrated in FIG. 6, the locking section 7 includes a vertical wall section 9, a bottom wall section 10 that is shaped to bend and extend inward at a 90-degree angle from the vertical wall section 9, and a distal section 11 that is curled upward in an arc shape, in cross section, from the bottom wall section 10. The retaining section 8 is shaped to bend and extend inward at a 90-degree angle from the vertical wall section 9, and is further shaped to bend and extend outward at a 180-degree angle.

The draining section 5 is made of a metal mesh member that is bent. The draining section 5 of the present embodiment employs a 16-mesh configuration with a 0.5 mm wire diameter, though the wire diameter and number of mesh openings can be appropriately selected to suit, for example, the intended use of the draining vessel 1.

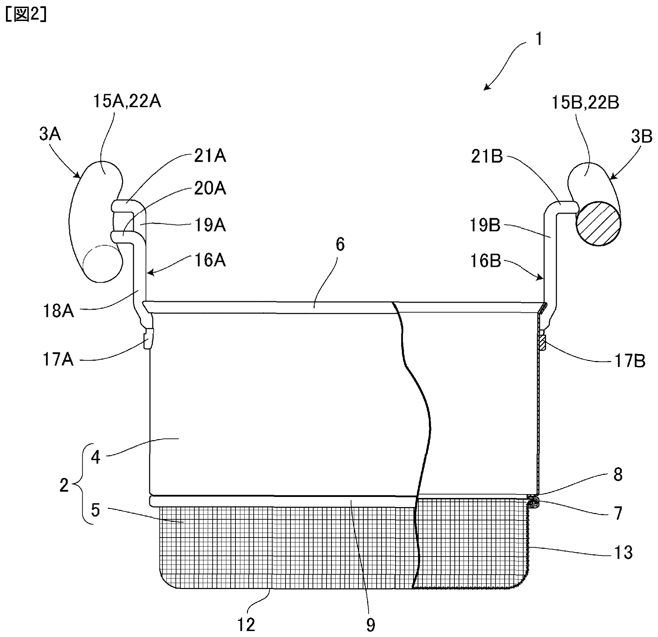

As illustrated in FIGs. 2 to 5, the draining section 5 has a bottom section 12 that is shaped to be substantially flat, and the bottom section 12 has an outer periphery section that is curbed and continuously connected to a side wall section 13 that is vertically arranged. As illustrated in FIG. 6, the side wall section 13 includes an engagement edge section 14 located at its upper end region, which is formed to curl outward in an arc shape in cross section. The engagement edge section 14 is arranged in an interlocking space S enclosed by the locking section 7 and the retaining section 8, and is engaged with both the locking section 7 and the retaining section 8.

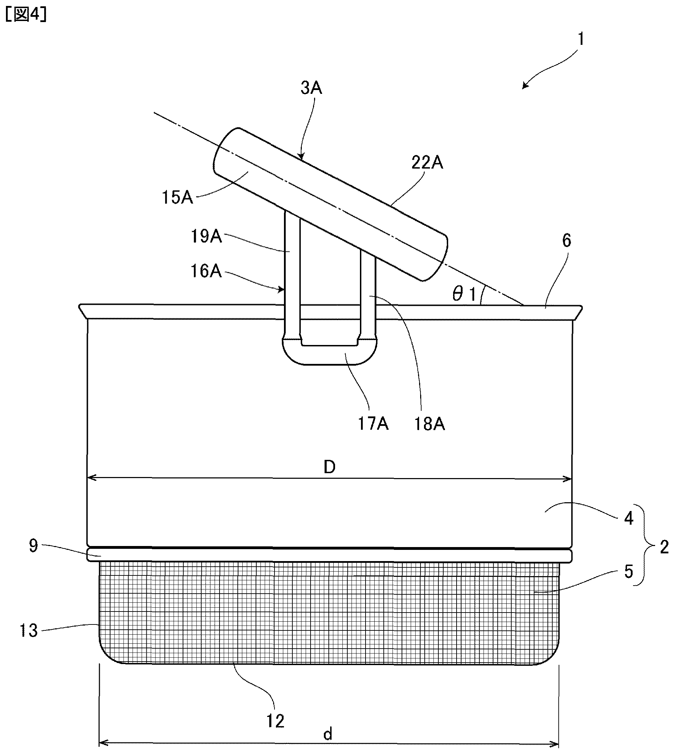

As illustrated in FIG. 4, the body section 4 has a diameter D that is formed to be slightly larger than the diameter d of the draining section 5. The draining section 5 of the present embodiment employs a design which is constructed from a metal mesh member, but the draining section may alternatively be constructed from a plate member having a plurality of small holes formed therein.

As illustrated in FIGs. 1 to 3, the handles 3A and 3B are arranged at positions that are opposite to each other. The handle 3A includes a gripping member 15A for allowing a user to grip and a connecting member 16A for connecting the gripping member 15A to the body section 4. The gripping member 15A is substantially round columnar with a curve. Specifically, the gripping member 15A is curved in an arc shape, where the side facing the gripping member 15B has a concave curve while the side facing away from the gripping member 15B has a convex curve. The connecting member 16A includes a fixing segment 17A fixed and attached to the body section 4 and first and second supporting segments 18A and 19A arranged and extended upward from the fixing segment 17A. This fixing segment 17A of the present embodiment is fixed to the body section 4 via welding, but it may be attached or fixed thereto via any known technique. The first and second supporting segments 18A and 19A are arranged to be substantially parallel with each other and configured so that an upper end 20A of the first supporting segment 18A is positioned below an upper end 20B of the second supporting segment 19A. The first supporting segment 18A is arranged to extend upward and the upper end 20A thereof is bent outwardly and connected to the gripping member 15A. The second supporting segment 19A is also arranged to extend upward and the upper end 20B thereof is bent outwardly and connected to the gripping member 15A. The first and second supporting segments 18A and 19A of the present embodiment are fixed to the gripping member 15A via welding but they may be attached or fixed thereto via any known technique. The upper end 20A of the first supporting segment 18A is positioned below the upper end 20B of the second supporting segment 19A. Consequently, the gripping member 15A is designed such that the section connected to the upper end 20A of the first supporting segment 18A lies at a lower level compared to the section connected to the upper end 20B of the second supporting segment 19A. The gripping member 15A is sloped when it is seen from a lateral view so that the upper rim section 6 and the gripping member 15A define an angle θ1 that is approximately 27 degrees (See FIG. 4). It is preferred that the gripping member 15A be designed so that the angle θ1 defined by the upper rim section 6 and the gripping member 15A is in a range of 15 to 50 degrees when it is seen from a lateral view in FIG. 4.

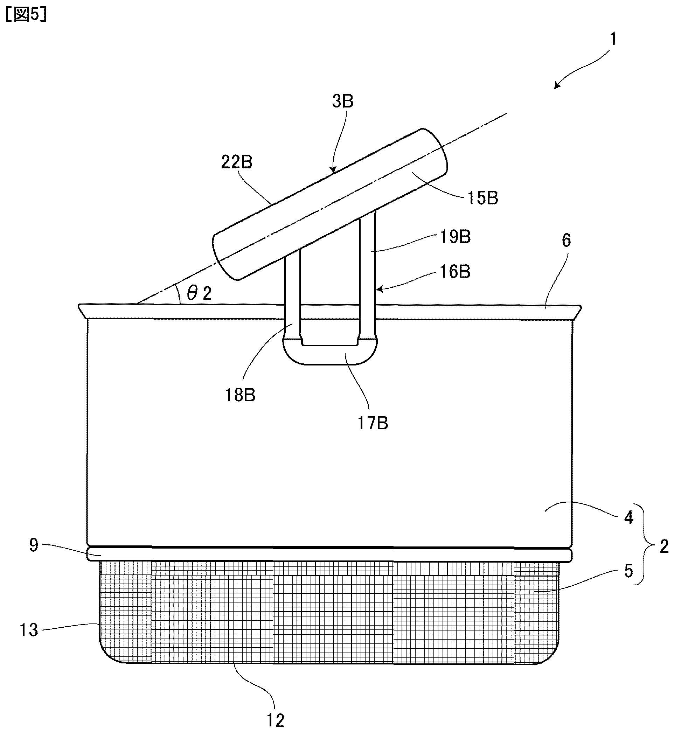

The handle 3B includes a gripping member 15B for allowing a user to grip and a connecting member 16B for connecting the gripping member 15B to the body section 4. The gripping member 15B is substantially round columnar with a curve. Specifically, the gripping member 15B is curved in an arc shape, where the side facing the gripping member 15A has a concave curve while the side facing away from the gripping member 15A has a convex curve. The connecting member 16B includes a fixing segment 17B fixed and attached to the body section 4 and first and second supporting segments 18B and 19B arranged and extended upward from the fixing segment 17B. This fixing segment 17B of the present embodiment is fixed to the body section 4 via welding but it may be attached or fixed thereto via any known technique. The first and second supporting segments 18B and 19B are arranged to be substantially parallel with each other and configured so that an upper end 21A of the first supporting segment 18B is positioned below an upper end 21B of the second supporting segment 19B. The first supporting segment 18B is arranged to extend upward and the upper end 21A thereof is bent outwardly and connected to the gripping member 15B. The second supporting segment 19B is also arranged to extend upward and the upper end 21B thereof is bent outwardly and connected to the gripping member 15B. The first and second supporting segments 18B and 19B of the present embodiment are fixed to the gripping member 15A via welding but they may be attached or fixed thereto via any known technique. The upper end 21A of the first supporting segment 18B is positioned below the upper end 21B of the second supporting segment 19B. Consequently, the gripping member 15B is designed such that the section connected to the upper end 21A of the first supporting segment 18B lies at a lower level compared to the section connected to the upper end 21B of the second supporting segment 19B. The gripping member 15B is sloped when it is seen from a lateral view so that the upper rim section 6 and the gripping member 15B define an angle θ2 that is approximately 27 degrees (See FIG. 5). It is preferred that the gripping member 15B be designed so that the angle θ2 defined by the upper rim section 6 and the gripping member 15B is in a range of 15 to 50 degrees when it is seen from a lateral view, as shown in FIG. 5.

The gripping members 15A and 15B may have any alternative shape which is not restricted to the substantially round columnar shape so long as the shape allows stable gripping. In addition, the connecting members 16A and 16B for connecting the gripping members 15A and 15B to the body section 4 may have any alternative shape as long as the angle θ defined by the gripping member 15A, 15B and the upper rim section 6 is in a range of 15 to 50 degrees.

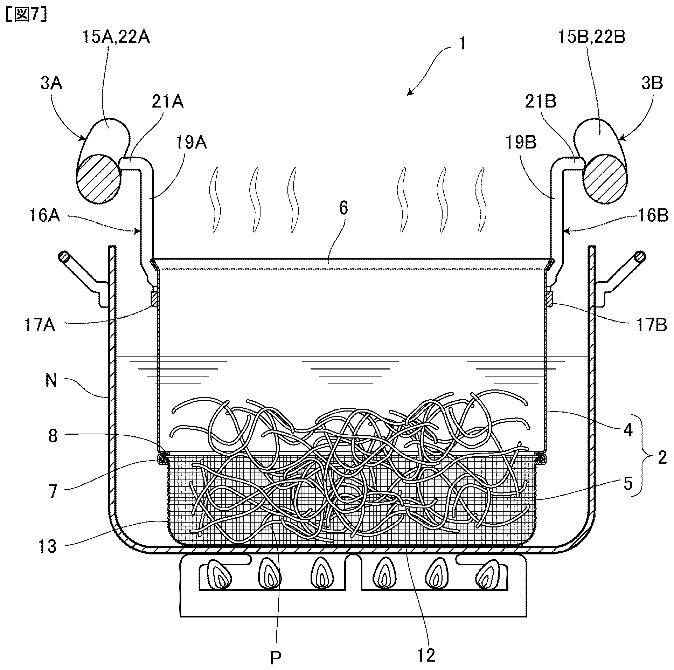

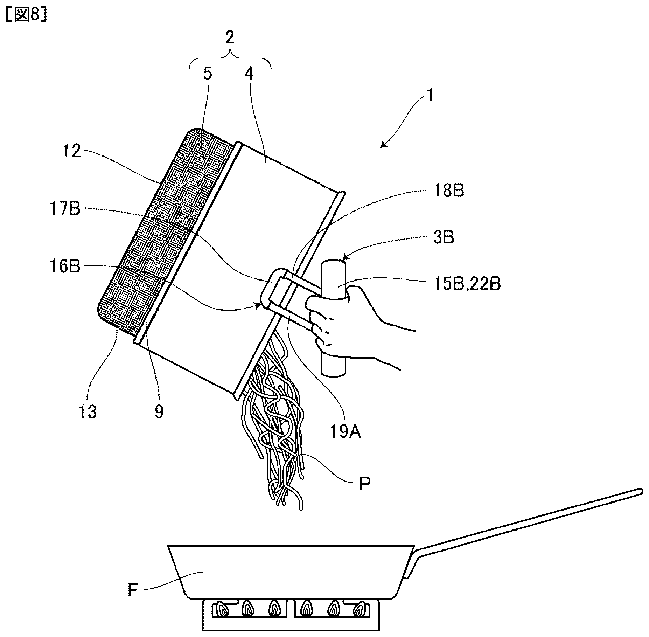

The usage of the draining vessel 1 will be explained. As shown in FIG. 7, the draining vessel 1 executes the boil-cooking process of pasta P, as a product to be cooked, having been put in the draining vessel 1, while maintaining its body section 4 and the draining section 5 being accommodated inside another pot N filled with (hot) water inside. Once the pasta P is fully boil-cooked, the gripping members 15A and 15B are held with both hands to lift the draining vessel 1 upward to thereby take out the pasta P. During this operation, the gripping members 15A and 15B are held so that their higher portions are positioned closer to the proximal side (which is the side closer to the user). That is, the right hand grips the gripping member 15A and the left hand grips the gripping member 15B. The draining section 5 is used to drain hot water from the pasta P and, as shown in FIG. 8, when the draining vessel 1 is inclined toward the proximal side-the side closer to the user-so that the gripping members 15A and 15B stand vertically upright, the body section 4 and the side wall section 13 of the draining section 5 are inclined at approximately 27 degrees from the horizontal direction, allowing the pasta P to flow along the side wall section 13 and the body section 4. The wrists do not need to be significantly flipped, and the arms only require slight flexing to position the gripping members 15A and 15B vertically upright. This design makes it easy to transfer pasta P to, for example, a frying pan F for the next cooking step. The draining vessel 1 is formed with a sloped upper rim section 6, which therefore enables pasta P to fall at an angle exceeding 27 degrees from the horizontal direction when it is removed from the draining vessel 1. That is, it allows the pasta to fall to a position more directly beneath it.

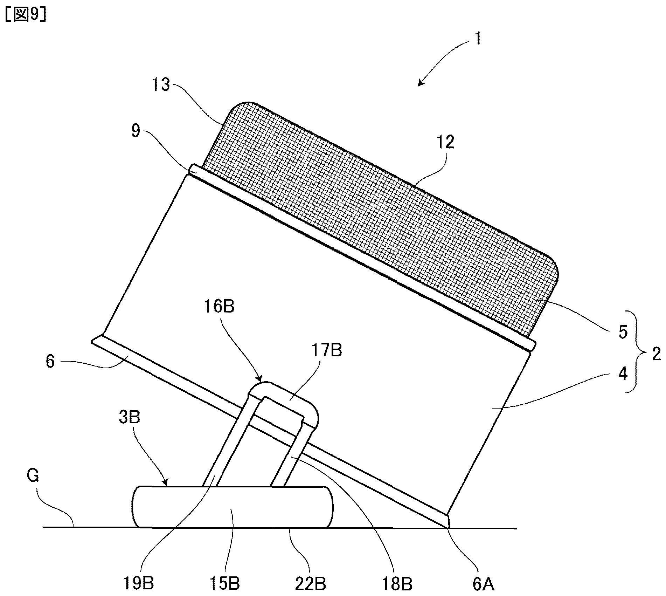

As shown in FIG. 9, the top sides 22A and 22B of the gripping members 15A and 15B are formed flat in shape when observed from a side view. When the top sides 22A and 22B of the gripping members 15A and 15B rest on the flat placement surface G, the upper rim section 6 is in contact with the placement surface G at a single point 6A of the upper rim section 6. This design allows invert placement of the draining vessel 1 during washing of the draining vessel 1 after use so that the three locations of the top sides 22A and 22B and the single point 6A of the upper rim section 6 are in contact with the placement surface G. At this point, the body section 4 and side wall section 13 of the draining section 5 are inclined, allowing water adhered to the draining vessel 1 to flow down easily.

To summarize, the draining vessel 1, according to the present embodiment, includes a bottomed cylindrical body 2 having an upper opening and a pair of handles 3A and 3B provided on the body 2, wherein the handles 3A and 3B includes gripping members 15A and 15B, respectively, which are sloped in a lateral view with respect to the upper rim section 6 of the body 2. Accordingly, a user can effortlessly maintain a natural posture without extensively flipping their wrists to incline the draining vessel 1, provided the gripping members 15A and 15B are held with both hands.

Further, the draining vessel 1 according to the present embodiment is designed such that the gripping members 15A and 15B and the upper rim section 6 define angles θ1 and θ2, which are in a range of 15 to 50 degrees in a lateral view. For this reason, as the draining vessel 1 is inverted so that the gripping members 15A and 15B are in the vertically upright position, the body 2 is inclined at an angle in a range of 15 to 50 degrees, allowing the pasta P, serving as a cooked product, to slide and be taken out from the draining vessel 1.

Further, the draining vessel 1 according to the present embodiment is designed such that the gripping members 15A and 15B are substantially round columnar and arranged opposite to each other. This design allows the gripping members 15A and 15B to be firmly gripped with both hands.

Furthermore, the draining vessel 1 according to the present embodiment is designed such that each one of the gripping members 15A and 15B has a concave curve on the side facing the other one of the gripping members 15B and 15A and a convex curve on the opposite side. This design allows the gripping members 15A and 15B to fit tightly in the palms for an easy grip when the gripping members 15A and 15B are held.

Moreover, the draining vessel 1 according to the present embodiment is designed such that each of the handles 3A and 3B includes a first supporting segment 18A, 18B and a second supporting segment 19A, 19B for connecting the gripping member 15A, 15B to the body 2, and the first supporting segment 18A, 18B has an upper end 20A, 20B connected to the gripping member 15A, 15B and the second supporting segment 19A,19B has an upper end 21A, 21B connected to the gripping member 15A, 15B, wherein the upper end 20A, 20B of the first supporting segment 18A, 18B is positioned lower than the upper end 21A, 21B of the second supporting segment 19A, 19B. This design allows the gripping members 15A and 15B to be securely fixed in a position that is inclined relative to the upper rim section 6.

The draining vessel 1 according to the present embodiment is designed such that the upper rim section 6 is in contact with a flat placement surface G at a single point 6A of the upper rim section 6 when the top sides 22A and 22B of the gripping members 15A and 15B rest on the flat placement surface G. This design allows the draining vessel 1 to be rest on the placement surface G in an inclined position, making it easier for water, adhered to the draining vessel 1, to flow off for drying the draining vessel 1.

The draining vessel 1, according to the present embodiment, is designed such that the body 2 includes a cylindrical body section 4 and a draining section 5 connected to a lower side of the body section 4. This design allows provision of the body section 4 that is formed by a plate member, making the body 2 stronger compared to a body 2 entirely made of metal mesh material, thus reducing the likelihood of deformation. Further, the draining section 5 enables drainage of water from the pasta P, as a cooked product, within the draining vessel 1.

The present invention is not limited to the above-described embodiment, and various modifications are possible within the scope of the gist of the present invention. For example, the cooking vessel is not limited to the draining vessel 1 described in the embodiment, and it may also encompass variations such as a double-handle pot or a strainer equipped with a pair of left-and-right handles.

### Reference Signs List

- 1: Draining vessel (cooking vessel)
- 2: Body
- 3A: Handle
- 3B: Handle
- 4: Body section
- 5: Draining section
- 6: Upper rim section
- 6A: Single point
- 15A: Gripping member
- 15B: Gripping member
- 18A: First supporting segment
- 18B: First supporting segment
- 19A: Second supporting segment
- 19B: Second supporting segment
- 20A: Upper end
- 20B: Upper end
- 21A: Upper end
- 21B: Upper end
- 22A: Placement surface
- 22B: Placement surface
- θ1: Angle
- θ2: Angle
- G: Placement surface

## Claims

1. A cooking vessel comprising:
a bottomed cylindrical body having an upper opening; and
a pair of handles provided on the body;
wherein each of the handles has a gripping member that is sloped in a lateral view with respect to an upper rim section of the body.

2. The cooking vessel according to claim 1, wherein the gripping member and the upper rim section define an angle in a range of 15 to 50 degrees in a lateral view.

3. The cooking vessel according to claim 1, wherein the gripping members are substantially round columnar and are arranged opposite to each other.

4. The cooking vessel according to claim 1, wherein each one of the gripping members has a concave curve on a side facing the other one of the gripping members and a convex curve on the opposite side.

5. The cooking vessel according to claim 1, wherein each handle comprises a first supporting segment and a second supporting segment for connecting the gripping member to the body, and the first supporting segment has an upper end connected to the gripping member and the second supporting segment has an upper end connected to the gripping member, wherein the upper end of the first supporting segment is positioned lower than the upper end of the second supporting segment.

6. The cooking vessel according to claim 1, wherein the upper rim section is in contact with a flat placement surface at a single point of the upper rim section when the gripping members rest on the flat placement surface.

7. The cooking vessel according to any one of claims 1 to 6, wherein the body comprises a cylindrical body section and a draining section connected to a lower side of the body section.
